# EUROPÄISCHE PATENTSCHRIFT

(11) **EP 4 332 170 B1**
(45) Veröffentlichungstag und Bekanntmachung des Hinweises auf die Patenterteilung: **16.10.2024**
(21) Anmeldenummer: 22193242.9
(22) Anmeldetag: 31.08.2022
(51) Int. Cl.: C08L 83/06, B27K 3/52, B27N 3/00, C09D 5/18, C08K 5/521, B27K 3/15

(54) **VERFAHREN ZUR HERSTELLUNG EINER MIT EINEM FLAMMENSCHUTZMITTEL VERSEHENEN HOLZWERKSTOFFPLATTE**
METHOD FOR PRODUCING A WOODEN PANEL PROVIDED WITH A FLAME RETARDANT
PROCÉDÉ DE FABRICATION D'UNE PLAQUE EN MATÉRIAU DÉRIVÉ DU BOIS POURVUE D'UN AGENT IGNIFUGE

(43) Veröffentlichungstag der Anmeldung: 06.03.2024
(73) Patentinhaber: SWISS KRONO Tec AG, 6004 Luzern (CH)
(72) Erfinder: Kalwa, Norbert, 32805 Horn-Bad Meinberg (DE); Gier, Andreas, 66399 Mandelbachtal (DE); Seidack, Georg, 16835 Herzberg (Mark) (DE)
(74) Vertreter: Maikowski & Ninnemann Patentanwälte Partnerschaft mbB

(56) Entgegenhaltungen:
- DE-A1- 102006 006 655

## Beschreibung

Die vorliegende Erfindung betrifft ein Verfahren zur Herstellung einer mit einem Flammenschutzmittel versehenen Holzwerkstoffplatte und Holzwerkstoffplatten enthaltend dieses Flammschutzmittel.

### Beschreibung

In den letzten Jahren hat es immer wieder gravierende Brände in Gebäuden mit teilweise erheblichen Opferzahlen gegeben. Dies hat dazu geführt, dass gesetzliche Regelungen bezüglich des Brandschutzes verschärft worden sind. Parallel dazu wurden allerdings auch bestimmte Flammschutzmittel wegen ökologischer oder gesundheitlicher Bedenken (wie z.B. Borsalze) verboten bzw. deren Einsatz streng reglementiert. Neben den daraus resultierenden verschärften Anforderungen bezüglich der Entflammbarkeit/Brennbarkeit von Produkten in bestimmten Anwendungen, ist auch bei vielen Anwendungen, bei denen Brandschutz nicht relevant ist, eine Nachfrage nach schwerentflammbaren Produkten feststellbar. Dies gilt auch für Holzwerkstoffe, die entweder im konstruktiven Bereich für Wände, Böden oder Decken (Fertighausbau) oder im dekorativen Bereich für Laminatböden, Möbel, Paneele usw. Bereich eingesetzt werden. Dabei werden OSB (Oriented Strand Board), Sperrholz und Spanplatte im konstruktiven Bereich und MDF/HDF (mitteldichte Faserplatte/Faserplatte mit erhöhter Rohdichte) und Spanplatte im dekorativen Bereich eingesetzt.

Bei der Herstellung von schwerentflammbaren Holzwerkstoffen werden meist anorganische Salze eingesetzt. Dies sind fast ausschließlich Sulfate, Phosphate und/oder Polyphosphate als Ammoniumsalze. Dies hat seinen Grund darin, dass diese Salze besonders gute Ergebnisse hinsichtlich der Schwerentflammbarkeit liefern. Diese Salze müssen in Lösungen mit relativ hohen Konzentrationen eingesetzt werden, da ansonsten zusätzlich durch das in den verwendeten Salzsupensionen enthaltende Wasser Probleme verursacht werden, so dass das Wasser aus dem Prozess entfernt werden muss.

In der DE 10 2006 006 655A1 wird z.B. ein Verbundwerkstoff auf der Basis von einem Zellulose-bzw. lignozellulosehaltigen Material, und einem Bindemittel erhältlich durch Umsetzung von Silan, Kieselsol, anorganischer Säure, und einem Ti-haltigen Vernetzer beschrieben. Dem Verbundwerkstoff können weitere Komponenten zugegeben werden, wie Paraffine, Wachse, Flammschutzmittel, Farbstoffe, Pigmente, Biozide Stoffe und Duftstoffe.

Während bei der Herstellung von flammgeschützten Span- oder Faserplatten ein Einbringen des Flammschutzmittels (FSM) in die Holzmatrix relativ einfach möglich ist, gibt es bei der Zugabe desselben zu den OSB-Strands Probleme. Strands sind die Grobspäne, die zur Herstellung der OSB eingesetzt werden.

Diese ursprünglich als Abfallprodukte der Furnier- und Sperrholzindustrie anfallenden OSB werden jedoch zunehmend im Holz- und Fertighausbau eingesetzt, da OSB leicht sind und trotzdem die an Bauplatten gestellten statischen Anforderungen erfüllen. So werden OSB als Bauplatten und als Wand- oder Dachbeplankung oder auch im Fußbodenbereich eingesetzt.

Die Herstellung der OSB erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert. Der Feuchtigkeitsgrad der Strands kann je nach verwendeten Klebstoff variieren, wobei sich die Feuchtigkeit deutlich unter 1 0% bewegen sollte, um Spalter durch zu hohen Dampfdruck in der Platte beim späteren Verpressen zu vermeiden. In Abhängigkeit vom Klebstoff kann eine Benetzung auf eher feuchten Strands oder auf trockenen Strands günstiger sein.

Im Anschluss an die Trocknung der Strands werden diese in eine Beleimvorrichtung eingeführt, in welcher der Leim bzw. Klebstoff fein verteilt auf die Späne aufgebracht wird. Zur Verleimung werden überwiegend PMDI- (polymeres Diphenylmethandiisocyanat) oder MUPF-Leime (Melamin-Harnstoff-Phenol-Formaldehyd) eingesetzt. Die Leime können in den OSB auch gemischt eingesetzt werden. Diese Leime werden verwendet, da die OSB wie oben erwähnt häufig für konstruktive Anwendungen genutzt werden. Dort müssen feucht- bzw. nässebeständige Leime verwendet werden.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB-Platten verwendet werden. Im Anschluss an die Streuung der Strands erfolgt ein kontinuierliches Verpressen der selbigen unter hohem Druck und hoher Temperatur von z.B. 200 bis 250°C.

Die bei der Herstellung verwendeten OSB-Strands besitzen eine Oberfläche, die das Eindringen der wässrigen Lösung des Flammschutzmittels erschwert. Dies führt dazu, dass nach dem Verdunsten des Wassers, das Flammschutzmittel sich im Wesentlichen als Pulver, nicht gebunden, auf den Strands befindet. Da sich die Strands bis zur Streuung durch die Transportvorrichtung gegeneinander reiben, wird ein Teil des Flammschutzmittels von den Strands abgerieben. Das Flammschutzmittel geht in der Folge im Prozess verloren oder findet sich in Bereichen der OSB wieder, wo es für die Entflammbarkeit keine Rolle spielt. Dies führt dazu, dass die Dosierung angehoben werden muss, was zusätzliche Kosten verursacht. Dies macht sich zum Beispiel in dem Umstand bemerkbar, dass das FSM nur in der Deckschicht dosiert wird, sich aber später auch im Produkt in der Mittelschicht wiederfindet. Zudem muss der erhöhten Menge an Flammschutzmittel mit mehr Leim Rechnung getragen werden, da das Flammschutzmittel die Verleimung stört.

Weiterhin ist die Fertigung von flammgeschützten Holzwerkstoffplatten generell und OSB im speziellen sehr aufwändig, da bezogen auf das Holz der Platte ca. 20 Gew% Flammschutzmittel dosiert werden muss. Dabei ist zu berücksichtigen, dass zu Beginn und zum Ende der Fertigung nicht unerhebliche Mengen an Produkt verworfen werden müssen, weil noch nicht oder nicht mehr die benötigte Menge an Flammenschutzmittel in den Strands ist. Dies führt ebenfalls zu erhöhten Kosten und macht den Prozess unflexibel, da immer möglichst große Mengen schwerentflammbare Platten produziert werden müssen, um die Verluste bezogen auf die Produktionsmenge klein zu halten.

Weiterhin weisen die Lösungen des Flammschutzmittels üblicherweise ca. 50 Gew% an Flammenschutzmittel auf. Höhere Konzentrationen sind nur noch durch Erwärmung der Lösungen möglich, was technisch an vielen Anlagen nicht möglich ist. Damit ist auch der Dosiermenge wegen der Wassermenge, die in das System eingebracht wird, eine Grenze gesetzt, da zu hohe Wassermengen zu einem zu hohen Dampfdruck in der Platte und damit zu Spaltern führen. Dies hat natürlich auch zur Folge, dass das hochkonzentrierte Flammenschutzmittel sich schlechter auf den Strands verteilt als bei einer weniger konzentrieren Lösung.

Ein weiteres Problem ist, dass heute zur Steigerung der Produktionsgeschwindigkeit vor den Contipressen Dampfinjektionsanlagen installiert sind. Dieser Heißdampf sorgt dafür, dass der Strandkuchen vorgewärmt wird und damit die Temperatur, die zur Aushärtung des verwendeten Leimes, wie z.B. des PMDI-Leims nötig ist, schneller erreicht wird. Dieser Dampf, der mit hohem Druck auf die Strands aufgebracht wird, wäscht natürlich auch Teile des Flammenschutzmittels von den Strands herunter.

Daraus ergeben sich Nachteile, insbesondere höhere Kosten, ein größere Verlust und ein unflexibler Prozess.

Der Erfindung liegt daher die technische Aufgabe zu Grunde die oben geschilderten Probleme zu lösen. Dies sollte, wenn möglich ohne gravierende Änderung des Prozesses erfolgen. Auch sollte die Lösung keinerlei andere Probleme z. B. durch Zugabe von kritischen Inhaltsstoffen oder Lösemitteln erzeugen. Auch sollten die möglicherweise zur Anwendung kommenden Lösungen kompatibel mit dem eingesetzten Flammenschutzmittel sein.

Diese Aufgabe wird erfindungsgemäß durch Verfahren zur Herstellung einer mit einem Flammenschutzmittel versehenen Holzwerkstoffplatte mit den Merkmalen des Anspruchs 1 gelöst.

Entsprechend wird ein Verfahren zur Herstellung einer Holzwerkstoffplatte bereitgestellt, wobei mindestens ein Flammschutzmittel als wässrige Suspension in Form eines Sprühmittels während des Herstellungsprozesses auf die Holzpartikel aufgebracht wird, und wobei das Flammenschutzmittel folgende Bestandteile umfasst:
- mindestens ein Phosphatsalz und/oder Sulfat, und
- eine Mischung aus mindestens einer Verbindung der allgemeinen Formel (I)

   **R¹ₐSiX₍₄₋ₐ₎** **(I),**

   wobei
   - X Alkoxy ist, und
   - R¹ ein organischer Rest ist ausgewählt aus der Gruppe umfassend Alkyl Cycloalkyl oder Phenyl, und
   - a = 1, 2, 3, insbesondere 1 oder 2 ist,
- mindestens einer Verbindung der allgemeinen Formel (II)

   **SiX₄** **(II),**

   wobei X Alkoxy ist, und
- mindestens einer Verbindung der allgemeinen Formel (III)

   **R²_{b}SiX₃** **(III),**

   wobei
   - X Alkoxy ist, und
   - R² ein organischer Rest ist ausgewählt aus der Gruppe umfassend C1-C10 Alkyl, die durch -O- oder -NH- unterbrochen sein können, und
   - wobei R² mindestens eine funktionelle Gruppe Q₁ aufweist, die ausgewählt ist aus einer Gruppe enthaltend eine Methacryl-, Methacryloxy-, Vinyl-, und Epoxid- Gruppe,
   - b = 1, 2, 3, insbesondere 1 oder 2 ist.

Es wird demnach eine Zusammensetzung aus mindestens einem Phosphat und einer Silanmischung zur Verwendung in Holzwerkstoffplatten bereitgestellt, wobei die verwendeten Silane bzw. das Silangemsich als Fixierungsmittel für das Phosphat oder Sulfat auf den für die Holzwerkstoffplatten verwendeten Holzpartikel fungieren; d.h. es wird mit den Silanen ein Fixierungsmittel für das Flammschutzmittel auf den Holzpartikeln eingebracht. Damit soll das Abreiben/Abfallen des Flammenschutzmittels nach dem Auftrag auf die Holzpartikel, wie z.B. Strands oder Späne, bis zur Verpressung der Holzpartikel zu Holzwerkstoffplatten vermieden bzw. verringert werden. Zu diesem Zweck wird dem Flammenschutzmittel vor der Dosierung auf die Holzpartikel das Silangemisch aus drei verschiedenen Silanen als zugegeben. Dies kann bereits im Lagertank oder vor dem Aufbringen des Flammenschutzmittels auf die Holzpartikel erfolgen.

Die Silane reagieren zum einen mit dem Flammenschutzmittel und zum anderen mit der Oberfläche der Holzpartikel. Die Silanverbindungen verbessern durch ihre Reaktionsfähigkeit mit der Holzoberfläche die Haftung des Phosphates auf der Holzoberfläche der Holzpartikel. Die Silanverbindung der Formel (I) bindet über den organischen Rest an das Flammschutzmittel. Die Silanverbindung der Formel (II) dient dem Aufbau eines SiO₂₋Netzwerkes über Kondensation der OH-Gruppen werden. Die Alkylgruppen, wie Methyl, der Silanverbindung der Formel (I) bewirken ein "Auflockern" des dreidimensionalen SiO₂-Netzwerkes, welches sich durch Kondensation bildet. Es werden flexiblere Netzstrukturen aufgebaut, die nicht zu spröde sind. Die Silanverbindung der Formel (III) verfügt über mindestens eine funktionelle Gruppe, wie z.B. Isocyanat- oder Glycidylgruppen, zur chemischen Anbindung an freie OH-Gruppen der Cellulose auf der Holzpartikeloberfläche.

Die Verwendung der vorliegenden Zusammensetzung als Flammenschutzmittel bietet verschiedene Vorteile. So ist eine zielgenauere Dosierung des Flammenschutzmittels und somit eine Reduzierung der erforderlichen Menge an Flammenschutzmittel möglich, wodurch die Kosten für das Flammenschutzmittel reduziert werden können. Auch wird eine bessere Materialnutzung ermöglicht.

Der (hydrolysierbare) Rest X der Silanverbindungen der Formeln (I)-(III) ist vorteilhafterweise ausgewählt aus einer Gruppe enthaltend C₁₋₆-Alkoxy, insbesondere Methoxy, Ethoxy, n-Propoxy, i-Propoxy und Butoxy. Besonders bevorzugt sind Methoxy und Ethoxy.

Der organische Rest R¹ der Verbindung der allgemeinen Formel (I) ist bevorzugt ausgewählt aus einer Gruppe umfassend C1-C10 Alkyl, bevorzugt C1-C8 Alkyl, insbesondere bevorzugt Methyl, Ethyl, Propyl, Pentyl, Hexyl, Heptyl, Octyl. Der Begriff "Cycloalkyl" umfasst die Gruppen Cyclopropyl, Cyclobutyl, Cyclopentyl, Cyclohexyl und Cycloheptyl.

Die Verbindung der allgemeinen Formel (I) kann insbesondere eine der folgenden Formeln umfassen: R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy.

In einer Variante der vorliegenden Zusammensetzung können Verbindungen der allgemeinen Formel (I) gemäß R¹ₐSiX₍₄₋ₐ₎, insbesondere R¹SiX₃, ausgewählt sein aus Methyltriethoxysilan, Phenyltriethoxysilan, Dimethyldiethoxysilan, Octyltriethoxysilan.

In einer besonders bevorzugten Variante der vorliegenden Zusammensetzung umfasst die Verbindung der allgemeinen Formel (II) SiX₄ Methoxy, Ethoxy, n-Propoxy oder i-Propoxy und Butoxy, als X. Besonders bevorzugt sind die Verbindungen Tetramethoxysilan und Tetraethoxysilan als Verbindung der allgemeinen Formel (II).

Der organische R² der Verbindung der allgemeinen Formel (III) ist bevorzugt ausgewählt aus einer Gruppe umfassend Methyl, Ethyl, Propyl, Pentyl, Hexyl, Heptyl, Octyl, die durch -O- oder -NH- unterbrochen sein können.

In einer Ausführungsform der vorliegenden Zusammensetzung ist die mindestens eine funktionelle Gruppe Q¹ der Verbindung der allgemeinen Formel (III) ausgewählt aus einer Gruppe enthaltend Epoxid-, Methacryloxy, Amino, und Vinyl. Besonders bevorzugte funktionelle Gruppe Q¹ ist Glycidyloxy. Die funktionelle Gruppe Q¹ weist vorteilhafterweise einen Rest mit einer Doppelbindung oder einer Epoxid-Gruppe auf, der mittels UV-Strahlung aktivierbar und polymerisierbar ist.

Die funktionellen Gruppen, über die eine Vernetzung mit der Holzoberfläche der Holzpartikel möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen dem Phosphat / Sulfat als Flammenschutzmittel und der Holzoberfläche ausgeführt werden kann.

In einer besonders bevorzugten Variante der vorliegenden Zusammensetzung umfasst die Verbindung der allgemeinen Formel (III) Methoxy, Ethoxy, n-Propoxy oder i-Propoxy und Butoxy, als X, bevorzugt Methoxy und Ethoxy.

Besonders bevorzugt sind die Verbindungen Glycidyoxypropyltriethoxysilan und Glycidyoxypropyltrimethyoxysilan als Verbindung der allgemeinen Formel (III).

Gemäß einer Variante umfasst die Zusammensetzung eine Silanmischung, in der eine erste Verbindung der Formel (I) **R¹ₐSiX₍₄₋ₐ₎** mit a= 1 entspricht, wobei X Methoxy, Ethoxy, n-Propoxy oder i-Propoxy ist, R¹ Methyl, Ethyl, n-Propyl oder n-Butyl ist, eine zweite Verbindung der Formel (II) **SiX₄** mit X Alkoxy, insbesondere Methoxy, Ethoxy, n-Propoxy oder i-Propoxy entspricht, und eine dritte Verbindung der Formel (III) **R²_{b}SiX₃** mit b= 1, wobei X Methoxy, Ethoxy, n-Propoxy oder i-Propoxy ist, R Methyl, Ethyl, n-Propyl oder n-Butyl ist und Q Glycidyl- oder Glycidyloxy-Gruppe ist.

Weitere Silane, die nicht unter eine der Formeln (I)-(III) fallen, sind nicht Bestandteil der erfindungsgemäßen Zusammensetzung und sind somit ausgenommen.

In einer Ausführungsform der vorliegenden Zusammensetzung umfasst die Silanmischung 5-25 Gew%, bevorzugt 10-20 Gew% von mindestens einem Silan der Formel (I), 3-15 Gew%, bevorzugt 6-11 Gew% von mindestens einem Silan der Formel (II) und 5-20 Gew%, bevorzugt 8-15 Gew% von mindestens einem Silan der Formel (III).

In einer bevorzugten Ausführungsform umfasst die Silanmischung 5-15 Gew%, bevorzugt 8-12 Gew% von mindestens einem Silan der Formel (I), 3-10 Gew%, bevorzugt 4-7 Gew% von mindestens einem Silan der Formel (II) und 10-20 Gew%, bevorzugt 13-17 Gew% von mindestens einem Silan der Formel (III).

In einer anderen bevorzugten Ausführungsform umfasst die Silanmischung 15-25 Gew%, bevorzugt 18-22 Gew% von mindestens einem Silan der Formel (I), 5-15 Gew%, bevorzugt 10-13 Gew% von mindestens einem Silan der Formel (II) und 5-10 Gew%, bevorzugt 7-9 Gew% von mindestens einem Silan der Formel (III).

In einer weitergehenden Ausführungsform der vorliegenden Zusammensetzung ist das mindestens eine Phosphat ein Monophosphat oder Polyphosphat und wird als Ammoniumsalz oder organisches Salz verwendet. Bevorzugt sind halogenfreie Phosphate, wie z.B. Ammoniumpolyphosphat, Bevorzugt wird eine Mischung aus Phosphaten und Sulfaten verwendet.

In einer Ausführungsform enthält die vorliegende Zusammensetzung mindestens ein Metallalkoxid, insbesondere ein Zirkoniumalkoxid, wie Zirkonium-n-propoxid. Bevorzugt beträgt die Menge an Metallalkoxid 1-3 Gew%, insbesondere 1-2 Gew%. Die verwendeten Alkoxide dienen als Kondensationskatalysator, um schon bei niedrigen Temperaturen einen möglichst hohen Kondensationsgrad zu haben.

In einer weiteren Ausführungsform ist in der vorliegenden Zusammensetzung mindestens ein Glycolether enthalten. Der Glycolether wird der Zusammensetzung als Mischung aus Wasser und mindestens einem Glycolether, insbesondere in einem Mischungsverhältnis von 60 Teilen Wasser und 40 Teilen Glycolether, zugegeben. Als Glycolether werden Dipropylenglycolmonomethylether, Tripropylenglycolmonomethylether, 1-Methoxy-2-propanol, Tripropylenglykol-monobutylether, Propylenglykol-butylether, Ethylenglykolmonophenylether, bevorzugt Dipropylenglycolmonomethylether verwendet. Glycolether dienen als nicht brennbares Lösemittel, welches sowohl gut zum Wasser des Flammschutzmittels als auch zum Alkohol der Silan passt. Bei Verwendung eines Glycolether kann auf den Schritt des bei der Herstellung des Flammenschutzmittels entstehenden Alkohols verzichtet werden, wie weiter unten gezeigt wird.

In einer bevorzugten Ausführungsform umfasst die vorliegende Zusammensetzung
- Mindestens ein Phosphat und/oder Sulfat,
- Mindestens eine Verbindung der allgemeinen Formel (I) gemäß R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy;
- Mindestens eine Verbindung der allgemeinen Formel (II) gemäß SiX₄ mit X als Methoxy, Ethoxy, n-Propoxy oder i-Propoxy und Butoxy;
- Mindestens eine Verbindung der allgemeinen Formel (III) gemäß R²SiX₃ mit R² als Methyl, Ethyl, Propyl, Pentyl, Hexyl, Heptyl, Octyl, die durch -O- oder -NHunterbrochen sein können, und funktionalisiert mit einer Epoxid- oder Vinyl-Gruppe als Q1, und X als Methoxy, Ethoxy, n-Propoxy, i-Propoxy oder Butoxy; und
- Mindestens ein Metallalkoxid, bevorzugt Zirkoniumalkoxid,
- Optional mindestens einen Glycolether, und
- Wasser.

In einer weiteren bevorzugten Ausführungsform umfasst die vorliegende Zusammensetzung
- Mindestens ein Phosphat und/oder Sulfat,
- Mindestens eine Verbindung der allgemeinen Formel (I) gemäß R¹SiX₃ oder R¹₂SiX₂ mit R¹ als Methyl, Ethyl, Propyl, und mit X als Methoxy, Ethoxy;
- Mindestens eine Verbindung der allgemeinen Formel (II) gemäß SiX₄ mit X als Methoxy, Ethoxy;
- Mindestens eine Verbindung der allgemeinen Formel (III) gemäß R²SiX₃ mit R² als Ethyl, Propyl, Pentyl, die durch -O- oder -NH- unterbrochen sein können, und funktionalisiert mit einer Epoxid- oder Vinyl-Gruppe als Q1, und X als Methoxy, Ethoxy; und
- Mindestens ein Metallalkoxid, bevorzugt Zirkoniumalkoxid,
- Optional mindestens einen Glycolether, und
- Wasser.

In einer weiteren Ausführungsform kann die vorliegende Zusammensetzung anorganische Partikel, insbesondere Nanopartikel auf der Basis von SiO₂, wie Kieselgele oder Zeolithe, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel kann die Menge an aufgenommenen Wirkstoff weiter erhöht werden.

Das vorliegende Flammenschutzmittel kann in einem Verfahren umfassend die folgenden Schritte hergestellt werden:
a) Bereitstellen von einer wässrigen Suspension enthaltend mindestens eine Verbindung der allgemeinen Formel (I), mindestens eine Verbindung der allgemeinen Formel (II) und mindestens eine Verbindung der allgemeinen Formel (III);
b) Zugabe von mindestens einem Katalysator, insbesondere einer basischen Verbindung, zu der Suspension aus mindestens einer Verbindung der Formel (I), der Formel (II) und der Formel (III);
c) Erwärmen der Mischung aus mindestens einer Verbindung der Formel (I), der Formel (II) und der Formel (III) und dem mindestens einen Katalysator;
d) Zugabe von mindestens einem Metallalkoxid, insbesondere einem Zirkoniumalkoxid, zu der Mischung, und
e1) entweder Abtrennen der gebildeten alkoholischen Phase (z.B. durch Verdampfen) von der wässrigen Phase der Mischung aus mindestens einer Verbindung der Formel (I), der Formel (II) und der Formel (III), oder
e2) Zugabe von einem Gemisch aus Wasser und mindestens einem Glycolether, und
f) Zugabe von mindestens einem Phosphat und/oder Sulfat zu der in Schritt e1) oder Schritt e2) erhaltenen Mischung.

Als Katalysator sind basische Verbindungen wie Laugen wie NaOH, KOH, bzw. Ammoniumhydroxyd Lösungen geeignet. Bevorzugt wird eine Natriumhydroxid-Lösung, insbesondere eine 0,1 molare Natriumhydroxid-Lösung verwendet.

In einer Variante werden in Schritt f) 20-40 Gew%, bevorzugt 25 - 35 Gew%, besonders bevorzugt 30 Gew% der in Schritt e1) oder Schritt e2) erhaltenen Mischung zu einer wässrigen Phosphatlösung, insbesondere einer Phosphatlösung mit einem Feststoffgehalt von 50Gew%, gegeben. Die Menge an Silanmischung in der finalen Zusammensetzung liegt dabei bevorzugt bei 2-10 Gew%, bevorzugt 3-8 Gew%, insbesondere bevorzugt bei 4-6 Gew%, z.B. bei 5 Gew%.

Die hergestellte wässrige Suspension des Flammenschutzmittels aus drei Silanen und Phosphat und/oder Sulfatist stabil und wird in Form eines Sprühmittels auf die Holzpartikel aufgetragen. Der Auftrag des Flammenschutzmittels erfolgt während der Herstellung einer Holzwerkstoffplatte.

Entsprechend wird ebenfalls ein Verfahren zur Herstellung einer Holzwerkstoffplatte bereitgestellt, welches die folgenden Schritte umfasst:
- Bereitstellen von Holzpartikeln; insbesondere getrockneten Holzpartikeln;
- Beleimen der Holzpartikel mit einem geeigneten Bindemittel,
- Verpressen der beleimten Holzpartikel zu einer Holzwerkstoffplatte,
wobei die mindestens eine oben beschriebene Flammenschutzmittelzusammensetzung auf die Holzpartikel vor, mit oder nach dem Aufbringen des Bindemittels auf die Holzpartikel aufgebracht, insbesondere aufgesprüht wird.

Die Menge an auf die Holzpartikel aufgesprühter Flammenschutzmittelzusammensetzung liegt zwischen 15 und 30 Gew%, bevorzugt zwischen 20 und 25 Gew% (fest auf Holz atro).

Bevorzugte Bindemittel sind ausgewählt aus der Gruppe enthaltend Formaldehyd-Klebstoffe, Polyurethan-Klebstoffe, Epoxidharz-Klebstoffe, Polyester-Klebstoffe, wobei hauptsächlich Formaldehyd-Klebstoffe zum Einsatz kommen.

Als Formaldehyd-Klebstoff kann insbesondere ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd Harz Klebstoff (MF) verwendet werden.

Als Alternative zum Formaldehyd-Klebstoff bieten sich in geringerem Umfang Polyurethan-Klebstoffe basierend auf aromatischen Polyisocyanaten, insbesondere Polydiphenylmethandiisocyanat (PMDI), Toluylendiisocyanat (TDI) und/oder Diphenylmethandiisocyanat (MDI), wobei PMDI besonders bevorzugt ist, an.

Zusätzlich zum Bindermittel werden in einer Ausführungsform den Holzpartikeln auch Paraffine (z.B. 3Gew% einer 50 Gew% iger Paraffinemulsion) zur Reduzierung der Wasseraufnahme und Quellung zugegeben. Die Paraffinemulsion wird bevorzugt auf die Holzpartikel gesprüht.

Die hergestellten Holzwerkstoffplatten können eine Grobspan (OSB)-Platte, eine Spanplatte oder eine Sperrholzplatte sein.

Bevorzugt werden OSB-Platten hergestellt, wobei das Verfahren folgende Schritte umfasst:
a) Herstellen von Strands(OSB-Strands) aus geeigneten Hölzern,
b) ggf. Zwischenlagerung der Holzstrands, insbesondere in Silos oder Bunkern,
c) Trocknen der Holzstrands,
d) Sortieren bzw. Sichtung der Holzstrands entsprechend der Größe der Holzstrands,
e) Beleimen der Holzstrands mit einem geeigneten Bindemittel, insbesondere mit mindestens einem Isocyanat;
f) Aufbringen der beleimten Holzsstrands auf ein Transportband mittels Wind- und/oder Wurfsichtung, und
g) Verpressen der auf dem Transportband angeordneten beleimten Holzstrands.
wobei die mindestens eine oben beschriebene Flammschutzmittelzusammensetzung auf die Holzstrands vor, mit oder nach dem Aufbringen des Bindemittels auf die Holzstrands aufgebracht, insbesondere aufgesprüht wird.

Wie oben angeführt, werden Grobspanplatten, auch OSB (oriented strand boards) genannt, aus langen Spänen (strands) in einem mehrstufigen Prozess hergestellt.

In einem ersten Schritt werden Strands aus entrindetem Rundholz, bevorzugt Nadelhölzer, in Längsrichtung durch rotierende Messer abgeschält.

Die so hergestellten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

OSB bestehen typischerweise aus zwei Deckschichten, die eine Mittelschicht begrenzen, wobei Deckschichten und Mittelschicht aus unterschiedlichen Arten von Holzstrands bestehen können. So können in den Deckschichten flächige Strands verwendet werden, während in der Mittelschicht qualitativ schlechtere Strands (oder auch Späne) zum Einsatz kommen können. Dabei ist es bevorzugt, wenn die Strands für die Deckschichten mit dem vorliegenden Flammenschutzmittel versetzt, z.B. besprüht, werden.

Als Bindemittel für OSB werden bevorzugt Isocyanate verwendet. In einer Ausführungsform basiert das mindestens eine Isocyanat auf aromatischen Polyisocyanaten, insbesondere Polydiphenylmethandiisocyanat (PMDI), Toluylendiisocyanat (TDI) und/oder Diphenylmethandiisocyanat (MDI), wobei PMDI besonders bevorzugt ist. Es können aber auch Melamin-Harnstoff-Formaldehyd-Leime oder Phenolleime eingesetzt werden. Diese besitzen ebenso wie PMDI eine hohe Wasserbeständigkeit. Zudem wird Melamin auch als Flammschutzmittel eingesetzt.

Wie bereits angedeutet, kann das mindestens eine Flammschutzmittel in einer Beleimtrommel (Coil) oder einem Trogmischer zusammen mit der Zugabe des Bindemittels auf die Holzstrands aufgebracht, insbesondere aufgesprüht werden.

Eine für das vorliegende Verfahren verwendete Beleimungseinrichtung in Form eines Coils besteht aus einem Zylinder und mindestens einem Versorgungsbalken für die Zufuhr von Klebstoff und Druckluft mit Sprühtellern, für deren Antrieb in Gehäusen angeordnete pneumatische Antriebsmotoren vorgesehen sind. Ein derartige Beleimungseinrichtung ist in der DE 10 2008 046 637 A1 beschreiben.

Ein geeigneter Trogmischer wird z.B. von der Firma Dieffenbacher vertrieben. Derartige Leimmischer sorgen durch ihr großes Kammervolumen und die optimale Verweilzeit des Materials für eine gleichmäßige Leimverteilung. Um ein optimales Beleimergebnis zu gewährleisten, wird der konstante Füllstand des Mischers durch eine Auslassklappe aufrechterhalten.

Die Flammenschutzmittelzusammensetzung kann sowohl in den Deckschichten als auch der Mittelschicht, oder auch nur in den Deckschichten oder nur in der Mittelschicht der OSB verwendet werden.

Nach dem Auftragen des Bindemittels mit dem Flammenschutzmittel auf die Holzstrands werden die beleimten Holzstrands auf einem Transportband abgelegt oder aufgestreut und anschließend zu einer OSB-Holzwerkstoffplatte verpresst.

Das Verpressen kann bei einer Presstemperatur zwischen 150 und 250°C, bevorzugt 180°C und 220°C, und einer Presszeit zwischen 30 und 240 sec, bevorzugt 100 und 210 sec, insbesondere 150 und 180sec erfolgen.

Die mit dem vorliegenden Verfahren hergestellten OSB weisen somit ein Bindemittel und die oben beschriebene Flammenschutzmittelzusammensetzung auf.

Dabei zeigte es sich, dass der Gehalt an Flammenschutzmittel auf den Strands nach Streuen und Pressen in der OSB bei Verwendung der Silanmischungen als Fixierungsmittel um bis zu 70% gegenüber Proben ohne Fixierungsmittel erhöht war.

Die mit dem beschriebenen Verfahren hergestellten Grobspanplatten (OSB) weisen eine Querzugsfestigkeit von größer als 0,3 N/mm², bevorzugt von größer 0,4 N/mm², bevorzugt von größer 0,45 N/mm², insbesondere bevorzugt größer 0,5 N/mm² auf. Die Querzugsfestigkeit kann in einem Bereich zwischen 0,3 und 0,6 N/mm², bevorzugt zwischen 0,4 und 0,6 N/mm², insbesondere bevorzugt zwischen 0,45 und 0,55 N/mm² liegen.

Des Weiteren weisen die mit dem beschriebenen Verfahren hergestellten Grobspanplatten (OSB) E-Module in Längsrichtung zwischen 3200 und 4000 MPa, bevorzugt zwischen 3400 und 3800 MPa und E-Module in Querrichtung zwischen 1400 und 1800 MPa, bevorzugt zwischen 1500 und 1600 MPa auf.

Die vorliegende OSB-Holzwerkstoffplatte kann eine Rohdichte zwischen 300 und 1000 kg/m³, bevorzugt zwischen 500 und 800 kg/m³, insbesondere bevorzugt zwischen 600 und 700 kg/m³ aufweisen.

Die Dicke der vorliegenden OSB-Holzwerkstoffplatte kann zwischen 5 und 50 mm, bevorzugt zwischen 8 und 40 mm betragen, wobei insbesondere eine Dicke zwischen 8 und 30 mm bevorzugt ist.

Wie oben erwähnt, ist es aber auch möglich mit dem vorliegenden Verfahren Holzspanplatten herzustellen.

Entsprechend wird ein Verfahren zur Herstellung von Holzspanplatten bereitgestellt, welches die folgenden Schritte umfasst:
a) Herstellen von Holzhackschnitzeln aus geeigneten Hölzern,
b) Zerkleinern der Holzhackschnitzel durch Zerspanen zur Gewinnung von Holzspänen;
c) Beleimen der Holzspäne mit mindestens einem Bindemittel;
d) Aufbringen der beleimten Holzspäne auf ein Transportband unter Ausbildung eines mehrschichtigen Spankuchens; und
e) Verpressen des Spankuchens zu einer Holzwerkstoffplatte.
wobei die mindestens eine oben beschriebene Flammschutzmittelzusammensetzung auf die Holzspäne vor, mit oder nach dem Aufbringen des Bindemittels auf die Holzspäne aufgebracht, insbesondere aufgesprüht, wird.

Die im Zerspanungsprozess hergestellten Holzspäne werden in feines und grobes Spanmaterial unterteilt, wobei die größeren Holzspäne bevorzugt in der Mittelschicht der Spanplatte verwendet werden und die kleineren Holzspäne bevorzugt in den Deckschichten verwendet werden. Dabei ist es bevorzugt, wenn die Holzspäne für die Deckschichten mit dem vorliegenden Flammenschutzmittel versetzt, z.B. besprüht, werden.

Im Falle von Holzspanplatten werden bevorzugt Bindemittel auf Formaldehydbasis eingesetzt, wobei für die Mittelschicht Bindemittelmengen zwischen 5 und 8 Gew%, bevorzugt zwischen 6 und 7 Gew%, und für die Deckschicht zwischen 6 und 10 Gew%, bevorzugt zwischen 8 und 9 Gew% eingesetzt werden. Bei Einsatz eines Bindemittels auf Polyurethan-Basis, wie PMDI, in Holzspanplatten beträgt die Bindemittelmenge in der Mittelschicht zwischen 2 und 5 Gew%, bevorzugt 3 Gew%, und in der Deckschicht zwischen 4 und 8 Gew%, bevorzugt 5 Gew%.

Nach dem Beleimen werden die beleimten Holzspäne auf ein Transportband unter Ausbildung eines Spankuchens aufgestreut. Im Falle der Holzspäne wird üblicherweise mit einer Windstreuung gearbeitet, wobei zunächst eine erste Deckschicht, gefolgt von der Mittelschicht und abschließend eine zweite Deckschicht gestreut wird.

Der Spankuchen wird anschließend zunächst vorgepresst und anschließend bei Temperaturen zwischen 100°C und 250°C, bevorzugt 130°C und 220°C, insbesondere bei 200°C heiß verpresst.

Die vorliegende Holzwerkstoffplatte in Form einer Holzspanplatte kann eine Rohdichte zwischen 400 und 1200 kg/m³, bevorzugt zwischen 500 und 1000 kg/m³, insbesondere bevorzugt zwischen 600 und 800 kg/m³ aufweisen.

Die Dicke der vorliegenden Holzwerkstoffplatte als Holzspanplatte kann zwischen 3 und 20 mm, bevorzugt zwischen 5 und 15 mm betragen, wobei insbesondere eine Dicke von 10 mm bevorzugt ist.

Die vorliegende Holzspanplatte besteht aus 60 bis 90 Gew%, bevorzugt 70 bis 80 Gew% an Holzspänen und 5 bis 20 Gew%, bevorzugt 10 bis 15 Gew% an Bindemitteln.

Die Erfindung wird nachfolgend an mehreren Ausführungsbeispielen näher erläutert.

### Ausführungsbeispiel 1:

Zu einem Flammschutzmittel auf Phosphat-/Polyphosphatbasis (Feststoffgehalt: ca. 50 Gew% werden 5 Gew% ino^{®}dur GW80-N-D (30 Gew%) zugemischt.

Synthese des Additivs ino^{®}dur GW80-N-D:
15,23 g Glycidyloxypropyltriethoxysilan, 9,75 g Methyltriethoxysilan und 5,7 g Tetraethoxysilan unter Verwendung von 1,67 g einer 0,1 molaren Natriumhydroxyd-Lösung werden die Silane hydrolysiert.

Nach einer Rührzeit von 60 Minuten bei 40 °C unter Rückfluss erfolgt eine Zugabe von 2,04 g Zirkon-n-propoxid (70 % in iso-Propanol). Nach einer weiteren Rührzeit von 60 Minuten bei Raumtemperatur wird 8,22 g Wasser hinzugetropft und 7,1 g Ethanol mit Hilfe eines Rotationsverdampfers (T=55°C und pₘᵢₙ= 105 mbar) entfernt.

Kostengünstigere Synthese: Aufgrund eines Preisdruckes sollte zum einen der Arbeitsschritt des Lösemitteltauschs durch einen Rotationsverdampfer vermieden und zum anderen ein kostengünstigeres Silangemisch verwendet werden. Hierzu wurde die Synthese angepasst:

### Ausführungsbeispiel 2: OSB schwerentflammbar

Zu einem Flammschutzmittel auf Phosphat-/Polyphosphatbasis (Feststoffgehalt: ca. 50 Gew% werden 5 Gew% ino^{®}dur GW80-N-D5 (30 Gew%) zugemischt.

Synthese des Additivs ino^{®}dur GW80-N-D5:
7,61 g Glycidyloxypropyltriethoxysilan, 19,5 g Methyltriethoxysilan und 11,4 g Tetraethoxysilan unter Verwendung von 1,92 g einer 0,1 molaren Natriumhydroxyd-Lösung werden die Silane hydrolysiert. Nach einer Rührzeit von 60 Minuten bei 40 °C unter Rückfluss erfolgt eine Zugabe von 1,24 g Zirkon-n-propoxid (70 % in iso-Propanol).

Nach einer weiteren Rührzeit von 60 Minuten bei Raumtemperatur wir 15,78 g eines Gemisches bestehend aus 60 Teilen Wasser und 40 Teilen Dipropylenglycolmethylether hinzugetropft weitere 30 Minuten bei Raumtemperatur gerührt.

Das fertige Additiv hat nun einen Flammpunkt von ca. 60 °C. Auch eine Zugabe von 25 Gew.% zu dem wässrigen Flammschutzmittel (Phosphat / Polyposphat) ergibt sich ein Flammpunkt weit über 70 °C und kann somit ohne Lösemitteltausch eingesetzt werden.

Dann wird dieses Gemisch in einem Coil ( Beleimtrommel ) auf die Deckschichtstrands für eine OSB in einer Menge von 24 Gew% (fest auf Holz atro ) aufgesprüht. Es wurden auch 5 Gew% PMDI (100%ig) und 3 Gew% Paraffinemulsion (50 Gew% ig ) dosiert. Für die Mittelschicht wurden Strands in einem weiteren Coil mit 3,5 Gew PMDI (100%ig) und 3 Gew% Paraffinemulsion (50 Gew% ig) besprüht. Nach dem Streuen der Strands werden von der Deckschicht Strands entnommen und auf den Flammschutzmittelgehalt analysiert. Es ergab sich ein Wert von 21 Gew%. Bei einer Nullprobe ohne Fixierungsmittel wurden nur 15 Gew% gefunden. Der Aufbau wurde durch eine Contipresse gefahren und unter Druck und Temperatur zu einer OSB gepresst (22 mm). Hinter der Presse wurden Plattenmuster gezogen und ebenfalls die Flammschutzmittelgehalte bestimmt. Dort ergab sich für die Probe mit Fixierungsmittel ein Wert von 20 Gew% und für die Probe ohne Fixierungsmittel ein Wert von 10 Gew%.

### Ausführungsbeispiel 3: Spanplatte schwerentflammbar

Zu einem Flammschutzmittel auf Phosphat-/Polyphosphatbasis (Feststoffgehalt: ca. 50 Gew% werden 5 Gew% ino^{®}dur GW80-N-D5 (30 Gew%) zugemischt (Herstellung wie Ausführungsbeispiel 2).

Dann wird dieses Gemisch in einem Mischer auf die Deckschichtspäne für eine Spanplatte in einer Menge von 20 Gew% ( fest auf Holz atro ) aufgesprüht. Es wurden auch 15 Gew% Harnstoff-Formaldehyd-Leim fest ( als 60%ige Lösung ) und 2 Gew% Heissparaffin dosiert. Der Leim enthielt einen Härter auf Basis eines Ammoniumsalzes in einer Menge von 5 Gew% fl./fl. ( 50%ige Lösung ).

Nach dem Streuen der Deckschichten und der Mittelschicht (Beleimung: 7 Gew% Harnstoff-Formaldehyd-Leim (fest auf Holz atro, 60%ige Lösung mit Härter auf Ammoniumsalzbasis (5 Gew% fl/ auf Leim fl.)). Den Mittelschichtspänen wurden ebenfalls 2 Gew% Heissparaffin zugegeben. Die Beleimung erfolgte ebenso wie bei der Deckschicht in einem Trogmischer.

Nach dem Streuen der Deck- und Mittelschicht, werden von der Deckschicht Späne entnommen und auf den Flammschutzmittelgehalt analysiert. Es ergab sich ein Wert von 16 Gew%. Bei einer Nullprobe ohne Fixierungsmittel wurden nur 13 Gew% gefunden. Die Späne wurden in einer Contipresse zu einer Dreischichtspanplatte verpresst (18 mm). Hinter der Presse wurden Plattenmuster gezogen und ebenfalls die Flammschutzmittelgehalte bestimmt. Dort ergab sich für die Probe der Deckschicht mit Fixierungsmittel ein Wert von 15 Gew% und für die Probe ohne Fixierungsmittel ein Wert von 12 Gew%.

## Patentansprüche

1. Verfahren zur Herstellung einer Holzwerkstoffplatte, wobei mindestens ein Flammschutzmittel als wässrige Suspension in Form eines Sprühmittels während des Herstellungsprozesses auf die Holzpartikel aufgebracht wird, wobei die wässrige Flammschutzmittelsuspension umfasst
- mindestens ein Phosphatsalz und/oder Sulfat,
- eine Mischung aus mindestens einer Verbindung der allgemeinen Formel (I)
**R¹ₐSiX₍₄₋ₐ₎** **(I),**
wobei
- X Alkoxy ist, und
- R¹ ein organischer Rest ist ausgewählt aus der Gruppe umfassend Alkyl Cycloalkyl oder Phenyl, und
- a = 1, 2, 3, insbesondere 1 oder 2 ist,
- mindestens einer Verbindung der allgemeinen Formel (II)
**SiX₄** **(II),**
wobei X Alkoxy ist, und
- mindestens einer Verbindung der allgemeinen Formel (III)
**R²SiX₃** **(III),**
wobei
- X Alkoxy ist, und
- R² ein organischer Rest ist ausgewählt aus der Gruppe umfassend C1-C10 Alkyl, die durch -O- oder -NH- unterbrochen sein können, und
- wobei R² mindestens eine funktionelle Gruppe Q₁ aufweist, die ausgewählt ist aus einer Gruppe enthaltend eine Methacryl-, Methacryloxy-, Vinyl-, und Epoxid- Gruppe.

2. Verfahren nach Anspruch 1, **dadurch gekennzeichnet, dass** X ausgewählt ist aus einer Gruppe enthaltend C₁₋₆-Alkoxy, insbesondere Methoxy, Ethoxy, n-Propoxy, i-Propoxy und Butoxy.

3. Verfahren nach einem der vorhergehenden Ansprüche, **dadurch gekennzeichnet, dass** R¹ der Verbindung der allgemeinen Formel (I) ausgewählt ist aus einer Gruppe umfassend C1-C10 Alkyl, bevorzugt C1-C8 Alkyl, insbesondere bevorzugt Methyl, Ethyl, Propyl, Pentyl, Hexyl, Heptyl, Octyl.

4. Verfahren nach einem der vorhergehenden Ansprüche, **dadurch gekennzeichnet, dass** die Verbindung der allgemeinen Formel (I) R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy ist.

5. Verfahren nach einem der vorhergehenden Ansprüche, **dadurch gekennzeichnet, dass** R² der Verbindung der allgemeinen Formel (III) ausgewählt ist aus einer Gruppe umfassend Methyl, Ethyl, Propyl, Pentyl, Hexyl, Heptyl, Octyl, die durch -O- oder -NHunterbrochen sein können.

6. Verfahren nach einem der vorhergehenden Ansprüche, **dadurch gekennzeichnet, dass** die mindestens eine funktionelle Gruppe Q¹ der Verbindung der allgemeinen Formel (III) ausgewählt ist aus einer Gruppe enthaltend Epoxid-, Amino- und Vinyl-Gruppe.

7. Verfahren nach einem der vorhergehenden Ansprüche, dadurch das gekennzeichnet, dass die Silanmischung 5-25 Gew%, bevorzugt 10-20 Gew% von mindestens einem Silan der Formel (I), 3-15 Gew%, bevorzugt 6-11 Gew% von mindestens einem Silan der Formel (II) und 5-20 Gew%, bevorzugt 8-15 Gew% von mindestens einem Silan der Formel (III) umfasst.

8. Verfahren nach einem der vorhergehenden Ansprüche, **dadurch gekennzeichnet, dass** das mindestens eine Phosphatsalz ein Monophosphat oder Polyphosphat, oder eine Mischung mit einem Sulfat ist.

9. Verfahren nach einem der vorhergehenden Ansprüche, **dadurch gekennzeichnet, dass** mindestens ein Glycolether enthalten ist, insbesondere Dipropylenglycolmonomethylether, Tripropylenglycolmonomethylether, 1-Methoxy-2-propanol, Tripropylenglykol-monobutylether, Propylenglykol-butylether, Ethylenglykolmonophenylether.

10. Verfahren nach einem der vorhergehenden Ansprüche, **gekennzeichnet durch** mindestens ein Metallalkoxid, insbesondere ein Zirkoniumalkoxid, wie Zirkonium-n-propoxid.

11. Verfahren nach einem der vorhergehenden Ansprüche, **dadurch gekennzeichnet, dass** die mindestens eine Holzwerkstoffplatte eine Grobspan (OSB)-Platte, Spanplatte oder Sperrholzplatte ist.

12. Verfahren nach einem der vorhergehenden Ansprüche, **gekennzeichnet durch** die folgenden Schritte:
- Bereitstellen von Holzpartikeln; insbesondere getrockneten Holzpartikeln;
- Beleimen der Holzpartikel mit einem geeigneten Bindemittel,
- Verpressen der beleimten Holzpartikel zu einer Holzwerkstoffplatte,
**dadurch gekennzeichnet, dass**
das mindestens eine Flammenschutzmittel auf die Holzpartikel vor, mit oder nach dem Aufbringen des Bindemittels auf die Holzpartikel aufgebracht, insbesondere aufgesprüht wird.

13. OSB-Platte herstellbar in einem Verfahren nach einem der Ansprüche 1-12.

14. Holzspanplatte herstellbar in einem Verfahren nach einem der Ansprüche 1-12.

15. Verfahren zur Herstellung von einem Flammenschutzmittels gemäß einem der Ansprüche 1-12 umfassend die folgenden Schritte:
a) Bereitstellen von einer wässrigen Suspension enthaltend eine Mischung aus mindestens einer Verbindung der allgemeinen Formel (I), mindestens einer Verbindung der allgemeinen Formel (II) und mindestens einer Verbindung der allgemeinen Formel (III) ;
b) Zugabe von mindestens einem Katalysator, insbesondere einer basischen Verbindung, zu der Suspension aus mindestens einer Verbindung der Formel (I), der Formel (II) und der Formel (III);
c) Erwärmen der Mischung aus mindestens einer Verbindung der Formel (I), der Formel (II) und der Formel (III) und dem mindestens einen Katalysator;
d) Zugabe von mindestens einem Metallalkoxid, insbesondere einem Zirkoniumalkoxid, zu der Mischung, und
e1) entweder Abtrennen der gebildeten alkoholischen Phase (z.B. durch Verdampfen) von der wässrigen Phase der Mischung aus mindestens einer Verbindung der Formel (I), der Formel (II) und der Formel (III) oder
e2) Zugabe von einem Gemisch aus Wasser und mindestens einem Glycolmethylether, und
f) Zugabe von mindestens einem Phosphat zu der in Schritt e1) oder Schritt e2) erhaltenen Mischung.

## Claims

1. A method of manufacturing a wood-based panel, wherein at least one flame retardant is applied to the wood particles as an aqueous suspension in the form of a spray agent during the manufacturing process, the aqueous flame retardant suspension comprising
- at least one phosphate salt and/or sulfate,
- a mixture of at least one compound of the general formula (I)
**R¹ₐSiX₍₄₋ₐ₎** **(I),**
whereby
- X is alkoxy, and
- R¹ is an organic moiety selected from the group consisting of alkyl cycloalkyl or phenyl, and
- a = 1, 2, 3, in particular 1 or 2,
- at least one compound of the general formula (II)
**SiX₄** **(II),**
where X is alkoxy, and
- at least one compound of the general formula (III)
**R² SiX₃** **(III),**
whereby
- X is alkoxy, and
- R² is an organic moiety selected from the group comprising C1-C10 alkyl, which may be interrupted by -O- or -NH-, and
- wherein R² comprises at least one functional moiety Q₁ selected from a group comprising a methacrylic, methacryloxy, vinyl and epoxy group.

2. Method according to claim 1, **characterized in that** X is selected from a group comprising C₁₋₆ -alkoxy, in particular methoxy, ethoxy, n-propoxy, i-propoxy and butoxy.

3. Method according to one of the preceding claims, **characterized in that** R¹ of the compound of the general formula (I) is selected from a group comprising C1-C10 alkyl, preferably C1-C8 alkyl, in particular preferably methyl, ethyl, propyl, pentyl, hexyl, heptyl, octyl.

4. Method according to one of the preceding claims, **characterized in that** the compound of the general formula (I) is R¹ SiX₃ or R¹₂ SiX₂ with R¹ as C1-C10 alkyl group, preferably methyl, ethyl, propyl, pentyl, hexyl, heptyl, octyl, and with X as alkoxy, in particular methoxy, ethoxy, n-propoxy or i-propoxy.

5. Method according to one of the preceding claims, **characterized in that** R² of the compound of the general formula (III) is selected from a group comprising methyl, ethyl, propyl, pentyl, hexyl, heptyl, octyl, which may be interrupted by -O- or -NH-.

6. Method according to one of the preceding claims, **characterized in that** the at least one functional moiety Q¹ of the compound of the general formula (III) is selected from a group comprising epoxide, amino and vinyl group.

7. Method according to one of the preceding claims, **characterized in that** the silane mixture comprises 5-25% by weight, preferably 10-20% by weight, of at least one silane of formula (I), 3-15% by weight, preferably 6-11% by weight, of at least one silane of formula (II) and 5-20% by weight, preferably 8-15% by weight, of at least one silane of formula (III).

8. Method according to one of the preceding claims, **characterized in that** the at least one phosphate salt is a monophosphate or polyphosphate, or a mixture with a sulphate.

9. Method according to one of the preceding claims, **characterized in that** at least one glycol ether is present, in particular dipropylene glycol monomethyl ether, tripropylene glycol monomethyl ether, 1-methoxy-2-propanol, tripropylene glycol monobutyl ether, propylene glycol butyl ether, ethylene glycol monophenyl ether.

10. Method according to one of the preceding claims, **characterized by** at least one metal alkoxide, in particular a zirconium alkoxide, such as zirconium n-propoxide.

11. Method according to one of the preceding claims, **characterized in that** the at least one wood-based panel is a oriented strand board (OSB), chipboard or plywood panel.

12. Method according to one of the preceding claims, **characterized by** the following steps:
- Providing wood particles; in particular dried wood particles;
- Gluing the wood particles with a suitable binding agent,
- Pressing the glued wood particles into a wood-based panel,
**characterized in that**
the at least one flame retardant is applied, in particular sprayed, to the wood particles before, with or after the binder is applied to the wood particles.

13. OSB panel producible in a process according to one of claims 1-12.

14. A chipboard panel producible in a process according to one of claims 1-12.

15. A method for the preparation of a flame retardant according to one of claims 1-12 comprising the following steps:
a) providing an aqueous suspension containing a mixture of at least one compound of the general formula (I), at least one compound of the general formula (II) and at least one compound of the general formula (III);
b) adding at least one catalyst, in particular a basic compound, to the suspension of at least one compound of the formula (I), of the formula (II) and of the formula (III);
c) heating the mixture of at least one compound of the formula (I), the formula (II) and the formula (III) and the at least one catalyst;
d) adding at least one metal alkoxide, in particular a zirconium alkoxide, to the mixture, and
e1) either separating the alcoholic phase formed (e.g. by evaporation) from the aqueous phase of the mixture of at least one compound of formula (I), of formula (II) and of formula (III), or
e2) adding a mixture of water and at least one glycol methyl ether, and
f) adding at least one phosphate to the mixture obtained in step e1) or step e2).

## Revendications

1. Procédé de fabrication d'un panneau en matériau dérivé du bois, dans lequel au moins un agent retardateur de flammes est appliqué sur les particules de bois pendant le processus de fabrication sous la forme d'un agent de pulvérisation en tant que suspension aqueuse, dans lequel la suspension aqueuse d'agent retardateur de flammes comprend
- au moins un sel de phosphate et/ou du sulfate,
- un mélange composé d'au moins un composé de la formule générale (I)
**R¹ₐSiX₍₄₋₁₎** **(I),**
dans lequel
- X est de l'alcoxy, et
- R¹ est un radical organique choisi parmi le groupe comprenant de l'alkyle, du cycloalkyle ou du phényle, et
- a est = 1, 2, 3, en particulier 1 ou 2,
- au moins un composé de la formule générale (II)
**SIX₄** **(II),**
dans lequel X est de l'alcoxy, et
- au moins un composé de la formule générale (III)
**R²SiX₃** **(III),**
dans lequel
- X est de l'alcoxy, et
- R² est un radical organique choisi parmi le groupe comprenant de l'alkyle en C1-C10, qui peut être interrompu par -O- ou -NH-, et
- dans lequel R² présente au moins un groupe fonctionnel Q₁, qui est choisi parmi un groupe contenant un groupe méthacrylique, un groupe méthacryloxy, un groupe vinylique et un groupe époxy.

2. Procédé selon la revendication 1, **caractérisé en ce que** X est choisi parmi un groupe contenant de l'alcoxy en C₁₋₆, en particulier du méthoxy, de l'éthoxy, du n-propoxy, du i-propoxy et du butoxy.

3. Procédé selon l'une quelconque des revendications précédentes, **caractérisé en ce que** R¹ du composé de la formule générale (I) est choisi parmi un groupe comprenant de l'alkyle en C1-C10, de manière préférée de l'alkyle en C1-C8, en particulier de manière préférée du méthyle, de l'éthyle, du propyle, du pentyle, de l'hexyle, de l'heptyle, de l'octyle.

4. Procédé selon l'une quelconque des revendications précédentes, **caractérisé en ce que** le composé de la formule générale (I) est R¹SiX₃ ou R¹₂SiX₂ avec R¹ en tant que groupe alkyle en C1-C10, de manière préférée méthyle, éthyle, propyle, pentyle, hexyle, heptyle, octyle, et avec X en tant qu'alcoxy, en particulier méthoxy, éthoxy, n-propoxy ou i-propoxy.

5. Procédé selon l'une quelconque des revendications précédentes, **caractérisé en ce que** R² du composé de la formule générale (III) est choisi parmi un groupe comprenant du méthyle, de l'éthyle, du propyle, du pentyle, de l'hexyle, de l'heptyle, de l'octyle, qui peuvent être interrompus par -O- ou -NH-.

6. Procédé selon l'une quelconque des revendications précédentes, **caractérisé en ce que** l'au moins un groupe fonctionnel Q¹ du composé de la formule générale (III) est choisi parmi un groupe contenant un groupe époxy, un groupe amino ou un groupe vinylique.

7. Procédé selon l'une quelconque des revendications précédentes, **caractérisé en ce que** le mélange de silane comprend 5-25 % en poids, de manière préférée 10-20 % en poids d'au moins un silane de la formule (I), 3-15 % en poids, de manière préférée 6-11 % en poids d'au moins un silane de la formule (II) et 5-20 % en poids, de manière préférée 8-15 % en poids, d'au moins un silane de la formule (III).

8. Procédé selon l'une quelconque des revendications précédentes, **caractérisé en ce que** l'au moins un sel de phosphate est un monophosphate ou un polyphosphate, ou un mélange avec un sulfate.

9. Procédé selon l'une quelconque des revendications précédentes, **caractérisé en ce qu'**au moins un éther de glycol est contenu, en particulier un dipropylène glycol monométhyl-éther, un tripropylène glycol monométhyl-éther, un 1-methoxy-2-propanol, un tripropylène glycol monobutyl-éther, un tripropylène glycol monobutyl-éther, un propylène glycol butyl-éther, un éthylène glycol monophényl-éther.

10. Composé selon l'une quelconque des revendications précédentes, **caractérisé par** au moins un alcoxyde métallique, en particulier un alcoxyde de zirconium, comme un n-propoxyde de zirconium.

11. Procédé selon l'une quelconque des revendications précédentes, **caractérisé en ce que** l'au moins un panneau en matériau dérivé du bois est un panneau OSB (à particules orientées), un panneau de particules ou un panneau de contre-plaqué.

12. Procédé selon l'une quelconque des revendications précédentes, **caractérisé par** les étapes suivantes :
- la fourniture de particules de bois ; en particulier de particules de bois séchées ;
- d'encollage des particules de bois d'un liant adapté,
- de compactage des particules de bois encollées en un panneau de matériau dérivé du bois,
**caractérisé en ce que**
l'au moins un agent retardateur de flammes est appliqué, en particulier pulvérisé, sur les particules de bois, avant, avec ou après l'application du liant sur les particules de bois.

13. Panneau à particules orientées pouvant être fabriqué dans un procédé selon l'une quelconque des revendications 1-12.

14. Panneau de particules de bois pouvant être fabriqué dans un procédé selon l'une quelconque des revendications 1-12.

15. Procédé de fabrication d'un agent retardateur de flammes selon l'une quelconque des revendications 1-12, comprenant les étapes suivantes :
a) de fourniture d'une suspension aqueuse contenant un mélange d'au moins un composé de la formule générale (I), d'au moins un composé de la formule générale (II) et d'au moins un composé de la formule générale (III) ;
b) d'ajout d'au moins un catalyseur, en particulier d'un composé basique, à la suspension composée d'au moins un composé de la formule (I), de la formule (II) et de la formule (III) ;
c) de chauffage du mélange composé d'au moins un composé de la formule (I), de la formule (II) et de la formule (III) de l'au moins un catalyseur ;
d) d'ajout d'au moins un alcoxyde métallique, en particulier d'un alcoxyde de zirconium, au mélange, et
e1) soit la séparation de la phase alcoolique formée (par exemple par évaporation) de la phase aqueuse du mélange composé d'au moins un composé de la formule (I), de la formule (II) et de la formule (III), soit
e2) l'ajout d'un mélange composé d'eau et d'au moins un éther méthylique de glycol, et
f) d'ajout d'au moins un phosphate au mélange obtenu à l'étape e1) ou à l'étape e2).
